# EUROPEAN PATENT APPLICATION

(11) **EP 4 570 125 A1**
(43) Date of publication of application: **18.06.2025**
(21) Application number: 24218974.4
(22) Date of filing: 11.12.2024
(51) Int. Cl.: A47B 47/04, B27F 1/02, B27M 3/04, F16B 5/06

(54) **A PIECE OF FURNITURE, A KIT OF PARTS AND METHOD FOR CREATING A LATERAL WALL FOR A PIECE OF FURNITURE**

(30) Priority: 12.12.2023 SE 2351418
(71) Applicant: Inter IKEA Systems B.V., 2616 LN Delft (NL)
(72) Inventor: Andersson, Benny, 342 52 Vislanda (SE); Lundqvist, Mats, 283 72 Lönsboda (SE)
(74) Representative: Ström & Gulliksson AB

(57) **Abstract**

The invention relates to piece of furniture (100) in the form of a storage unit. The piece of furniture comprises at least two rectangular wood-based panels (6, 6') forming a left vertical lateral wall and a right vertical lateral wall, wherein the left vertical lateral wall and the right vertical lateral wall are arranged at a distance from each other in a horizontal direction for defining a storage space between the walls. The piece of furniture (100) further comprises a further rectangular panel (104) forming a vertical backwall spanning the distance between the left vertical lateral wall and the right vertical lateral wall. Each one of the left vertical lateral wall and the right vertical lateral wall is provided with a longitudinal engagement groove extending in a main face of the wall and adjacent a rear edge of the wall. A first end of the engagement groove is open towards an upper edge of the wall, wherein an edge strip (28, 28') is provided on a lower edge of the wall covering a second end of the engagement groove, wherein the left vertical lateral wall and the right vertical lateral wall are mirrored with regard to the longitudinal engagement grooves so that the longitudinal engagement grooves face each other and the back wall (104) is arranged so that its opposite edges (106, 108) engage with the engagement grooves, wherein the edge strips (28, 28') form an end stop for the back wall for aligning the back wall relative to the left vertical lateral wall and the right vertical lateral wall.

## Description

### TECHNICAL FIELD

The invention relates to a piece of furniture in the form of a storage unit. The storage unit may be a cabinet, cupboard, bookshelf or wardrobe. More specifically, such a storage unit comprises a plurality of wood-based panels arranged and joined to form a box-like shape.

Such a wood-based panel may comprise a flat wood-based core and a decorative and/or hard top layer arranged on a main side surface of the flat wood-based core. The wood-based core of the panel may be made of fibre board like MDF (Medium Density Fibre board) or HDF (High Density Fibre board) or plywood. The decorative top layer may be a plastic coating such as Melamine.

More specifically, the storage unit comprises at least two rectangular wood-based panels forming a left vertical lateral wall and a right vertical lateral wall, wherein the left vertical lateral wall and the right vertical lateral wall are arranged at a distance from each other in a horizontal direction. The storage unit further comprises a horizontal bottom wall and a horizontal top wall arranged at a distance from each other in a vertical direction. The lateral walls, the bottom wall and the top wall may be adapted to be rigidly attached to each other forming a structural unit. A storage space is thus defined between the walls. The storage unit further comprises a further rectangular panel forming a vertical back wall spanning the distance between the left vertical lateral wall and the right vertical lateral wall. The back wall may be of a non-structural character with a main purpose to close the storage unit rearwards. Further, the back wall may be connected to the lateral walls. More specifically, each one of the lateral walls may be provided with a vertically oriented longitudinal engagement groove adjacent its rear edge. The back walls may be arranged in a mirrored relationship for receipt of opposite lateral edges of the back wall. More specifically, the opposite lateral edges of the back wall and the longitudinal engagement grooves have complimentary shaped crosswise geometries for engagement.

More specifically, the storage unit may be provided as a kit of parts in a flat package for easy transport and assembly at a desired destination. The lateral walls, the bottom wall and the top wall may be adapted with a hole pattern adjacent their edges for assembly to a structural unit by means of fasteners. Further, the lateral walls may be adapted so that the back wall may be slid into the longitudinal engagement grooves from above and downwards. A lower edge of the back wall may then be received in a groove in the bottom wall, wherein the bottom wall forms an end stop for the vertical movement of the back wall towards its intended position. Especially, the longitudinal engagement grooves may be designed with a so-called undercut, which creates conditions for an easy assembly and stable furniture.

Such longitudinal undercut engagement grooves may be formed by different material removing methods, such as milling and sawing. There is however a challenge to produce the wood-based panels so that they are aesthetically attractive in an efficient way. More specifically, shavings or chips formed during the cutting of the engagement grooves should be transported away in a proper and suitable way. Especially, there is a problem of shavings or chips that may remain at the edge of the panel where the cutting tool exits the panel, wherein the shavings or chips may project from the edge of the panel.

### SUMMARY

One object of the invention is to achieve a piece of furniture that comprises a plurality of wood-based panels and that creates conditions for an efficient production and an aesthetically desirable appearance.

The object is achieved by a piece of furniture according to claim 1. Thus, it is achieved by a piece of furniture in the form of a storage unit, wherein the piece of furniture comprises at least two rectangular wood-based panels forming a left vertical lateral wall and a right vertical lateral wall, wherein the left vertical lateral wall and the right vertical lateral wall are arranged at a distance from each other in a horizontal direction for defining a storage space between the walls, wherein the piece of furniture further comprises a further rectangular panel forming a vertical back wall spanning the distance between the left vertical lateral wall and the right vertical lateral wall, wherein each one of the left vertical lateral wall and the right vertical lateral wall is provided with a longitudinal engagement groove extending in a main face of the wall and adjacent a rear edge of the wall, wherein a first end of the engagement groove is open towards an upper edge of the wall, wherein an edge strip is provided on a lower edge of the wall covering a second end of the engagement groove, wherein the left vertical lateral wall and the right vertical lateral wall are mirrored with regard to the longitudinal engagement grooves so that the longitudinal engagement grooves face each other and the back wall is arranged so that its opposite edges engage with the engagement grooves, wherein the edge strips form an end stop for the back wall for aligning the back wall relative to the left vertical lateral wall and the right vertical lateral wall.

In production of such wood-based panels, by arranging the edge strip on the edge of the panel where a cutting tool that creates the longitudinal engagement groove exits the panel, any shavings or chips formed during the cutting and projecting from the edge of the panel where the cutting tool exits the panel may be concealed. More specifically, any such projecting shavings or chips may be pushed/deflected by an inner surface of the edge strip towards the panel edge and/or into the formed longitudinal engagement groove. Accordingly, the resulting panel will have a smooth outer surface of the edge defined by an outer surface of the edge strip. Thus, the invention creates conditions for reducing the number of steps/operations during production in that it has turned out that there is no need for any machining removing any such projecting shavings or chips between the cutting of the groove and the application of the edge strip.

Further, the arrangement of the edge strip forming an end stop for the back wall creates conditions for new designs of storage units. More specifically, a horizontally extending bottom wall in the storage unit would not need to provide the function of an end stop.

Accordingly, in assembly of the storage unit, the left vertical lateral wall and the right vertical lateral wall are first arranged in parallel with each other with a predetermined spacing. Preferably, the left vertical lateral wall, the right vertical lateral wall, a top wall and a bottom wall are first joined together to form a structural unit. More specifically, the left vertical lateral wall and the right vertical lateral wall are arranged so that the upper ends of the longitudinal engagement grooves are open and accessible from above. The back wall may then be applied from above so that its opposite lateral edges are received simultaneously in the longitudinal grooves in the opposite lateral walls. The back wall may then be moved downwards wherein it is guided by the longitudinal grooves in the opposite lateral walls until it reaches the edge strips.

As mentioned above, in each one of the wood-based panels that is adapted to form a lateral wall, a first end of the engagement groove is open towards an upper edge of the wall, wherein an edge strip is provided on a lower edge of the wall covering a second end of the engagement groove. Accordingly, a kit of parts adapted for such a storage unit would comprise a first wood-based panel dedicated for a right vertical wall and a second wood-based panel dedicated for a left vertical wall. In other words, the first wood-based panel dedicated for the right vertical wall may not be used for the left vertical wall and vice versa.

The term "edge" is here used for the flat surface bridging two main flat surfaces of the panel, ie the edge defines a thickness of the panel.

The edge strip further has a decorative feature, wherein a rough surface of an edge of the wood-based core is covered.

According to one example, the wood-based panel has a flat rectangular shape, wherein it extends in a flat plane. Accordingly, the wood-based panel comprises a first rectangular main flat surface and second rectangular main flat surface facing in opposite directions. The first main flat surface and the second main flat surface are arranged in planes parallel with each other and spaced from each other. Accordingly, the wood-based panel has a uniform thickness. Further, the wood-based panel comprises edges bridging the distance between the first main flat surface and the second main flat surface. More specifically, the edges comprise a first pair of parallel, straight and spaced edges and a second pair of parallel, straight and spaced edges that are perpendicular relative to the first pair of edges. Each one of the edges extends in a plane perpendicularly to the first main flat surface and the second main flat surface.

According to one example, the engagement groove is formed as a longitudinal groove with a linear extension extending in a main face of the panel in parallel with and adjacent one of the edges of the panel.

According to one embodiment example, the longitudinal engagement groove is an undercut groove. It creates conditions for an easy assembly in that the back wall may be guided by the longitudinal engagement grooves of the lateral walls. It further creates conditions for a rigid attachment of the back wall to the lateral walls in an assembled state.

According to one further embodiment example, the edge strip is formed in a plastic material. It creates conditions for an easy attachment of the edge strip to the panel edge. The plastic material may be polypropylene, acrylonitrile butadiene styrene (ABS), polyethylene, polyamide, polystyrene, polyoxymethylene, polytetrafluoroethylene, or a combination thereof. The edge strip may be attached to the panel edge by means of an adhesive, such as glue. Further, the edge strip may have an extension similar to an extension of the panel edge. More specifically, the edge strip may have a length that is substantially the same as a main extension of the panel edge and a width that is substantially the same as a secondary extension of the panel edge.

Alternatively, the edge strip may be made of a strip of solid wood or solid wood veneer. The edge strip in the form of a solid wood strip may be formed from for example, oak, beech, birch, pine, or another type of solid wood.

According to a further embodiment, the edge strip has an extension covering substantially the complete rear edge of the wood-based panel.

In one embodiment, the edge strip has a width W of 5-40 mm. The width W depends on the width of the rear edge.

According to yet a further embodiment, the edge strip has a thickness of 0.5-5 mm, more typically a thickness of 0.7-3 mm.

The edge strip may be attached to the rear edge by means of an adhesive, such as hot melt glue, polyvinyl acetate adhesive, epoxy adhesives, polyurethane adhesives, polyimide adhesives, or another suitable adhesive.

One further object of the invention is to achieve a kit of parts for a piece of furniture that comprises a plurality of wood-based panels and that creates conditions for an efficient production and an aesthetically desirable appearance.

The object is achieved by a kit of parts according to claim 4. Thus, it is achieved by a kit of parts for forming a piece of furniture in the form of a storage unit, wherein the kit of parts comprises at least two rectangular wood-based panels adapted for forming a left vertical lateral wall and a right vertical lateral wall in the storage unit, wherein the kit of parts further comprises a further rectangular panel adapted for forming a back wall spanning the distance between the left vertical lateral wall and the right vertical lateral wall in the storage unit, wherein each one of the two rectangular wood-based panels is provided with a longitudinal engagement groove extending in a main face of the panel and adjacent a rear edge of the panel, wherein a first end of the engagement groove is open towards an upper edge of the panel, wherein an edge strip is provided on a lower edge of the panel covering a second end of the engagement groove, wherein the two rectangular wood-based panels are mirrored with regard to the longitudinal engagement grooves so that, in an assembled state, the longitudinal engagement grooves face each other and the back wall may be arranged so that its opposite edges engage with the engagement grooves, wherein the edge strips form an end stop for the back wall during assembly as the back wall may be slid into the engagement grooves from above and downwards.

Accordingly, the storage unit may be provided as a kit of parts in a flat package for easy transport and assembly at a desired destination.

One further object of the invention is to achieve a method for creating a lateral wall for a piece of furniture in the form of a storage unit that creates conditions for an efficient production and an aesthetically desirable finish of the lateral wall, especially adjacent ends of an engagement groove.

The object is achieved by a method according to claim 7. Thus, it is achieved by a method for creating a lateral wall for a piece of furniture in the form of a storage unit, comprising the steps of forming a longitudinal engagement groove in a rectangular wood-based panel by moving at least one cutting tool in relation to the wood-based panel in at least one operation so that the cutting tool engages with the wood-based panel at a first edge of the wood-based panel and exits the wood-based panel at a second edge of the wood-based panel opposite the first edge and thereafter attaching an edge strip on the second edge of the wood-based panel so that the edge strip covers a second end of the engagement groove where the cutting tool exited the wood-based panel while maintaining a first end of the engagement groove in an open state.

In production of such wood-based panels, by arranging an edge strip on the edge of the panel where a cutting tool that creates a longitudinal engagement groove exits the panel, any shavings or chips formed during the cutting and projecting from the edge of the panel where the cutting tool exits the panel may be concealed. More specifically, any such projecting shavings or chips may be pushed/deflected by an inner surface of the edge strip towards the panel edge and/or into the formed longitudinal engagement groove. Accordingly, the resulting panel will have a smooth outer surface of the edge defined by an outer surface of the edge strip. Thus, the invention creates conditions for reducing the number of steps/operations during production in that it has turned out that there is no need for any machining removing any such projecting shavings or chips between the cutting of the groove and the application of the edge strip.

Accordingly, the method comprises the step of moving the cutting tool relative to the wood-based panel in a way that the cutting tool engages with the wood-based panel in a first edge of the panel, that the cutting tool is moved in parallel with an extension plane of the wood-based panel so that the engagement groove is formed in a main flat surface of the wood-based panel and that the cutting tool exits the panel in a second edge of the panel opposite the first edge of the panel so that the engagement groove is continuous between the first edge and the second edge of the panel.

According to one embodiment example, the cutting tool comprises a rotating saw blade adapted to form the engagement groove.

According to one further embodiment example, the method comprises the steps of forming the longitudinal engagement groove with an undercut by moving at least two cutting tools in relation to the wood-based panel in two consecutive operations.

According to one further embodiment example, a base portion of the engagement groove is formed in a first operation by means of a first cutting tool, wherein a second cutting tool comprises at least one stationary cutting head for forming the undercut, wherein the wood-based panel is forwarded so that a support part of the stationary cutting head enters an open end of the base portion of the engagement groove and a cutting part of the stationary cutting head, that extends transversally relative to the support part, engages with the wood-based panel adjacent the base portion of the engagement groove.

According to one further embodiment example, the method comprises the step of forming the longitudinal engagement groove in a linear extension in parallel with and adjacent a lateral edge of the wood-based panel.

According to one further embodiment example, the method comprises the steps of forwarding the wood-based panel on a conveyor past the cutting tool so that a cutting edge of the cutting tool engages with the wood-based panel at a front edge of the wood-based panel in the forwarding direction and exits the wood-based panel at a rear edge of the wood-based panel.

According to one example, the cutting tool is arranged below a path of the wood-based panel as it is forwarded on the conveyor. The wood-based panel may be arranged with its main plane generally horizontally on the conveyor. The cutting tool may be arranged with a rotational axis stationary relative to the conveyor so that the engagement groove is formed to have a linear extension in parallel with the forwarding direction. According to one example, the wood-based panel has a rectangular shape, wherein it comprises parallel edges that form a front edge and rear edge in the forwarding direction. Further, the panel comprises two further parallel edges that form lateral edges. Accordingly, the engagement groove is formed in parallel with one of the parallel lateral edges.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a partly cut perspective view from above of a wood-based panel for being machined,
Fig. 2 is a schematic view of the panel in fig. 1 and a first cutting tool for material removal of the panel from below,
Fig. 3 is a cross sectional view of the panel along the cut A-A in fig. 2,
Fig. 4 is a schematic view of the panel and a second cutting tool for material removal of the panel from below in a step after the material removal in fig. 2,
Fig. 5 is a cross sectional view of the panel along the cut B-B in fig. 4,
Fig. 6 is a perspective view of a stationary cutting device,
Fig. 7 is a front view of the stationary cutting device in fig. 6,
Fig. 8 is a schematic view of the panel and the stationary cutting device in fig. 6 for material removal of the panel from below in a step after the material removal in fig. 4,
Fig. 9 is a cross sectional view of the panel along the cut C-C in fig. 8,
Fig. 10a is a perspective cut view of the panel in fig. 9,
Fig. 10b is a perspective cut view of the panel in fig. 10a, wherein an edge strip is disclosed for application,
Fig. 10c is a perspective cut view of the panel in fig. 10b, wherein the edge strip is applied,
Fig. 11a is a perspective rear view of a piece of furniture in the form of a storage unit comprising the panel in fig. 10c, wherein a rear panel is in an intermediate assembly state, and
Fig. 11b is a perspective rear view of the storage unit in fig. 11a in an assembled state.

### DETAILED DESCRIPTION OF EXAMPLE EMBODIMENTS

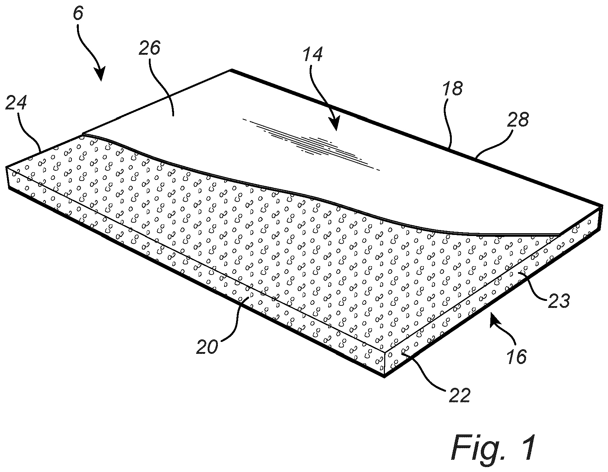

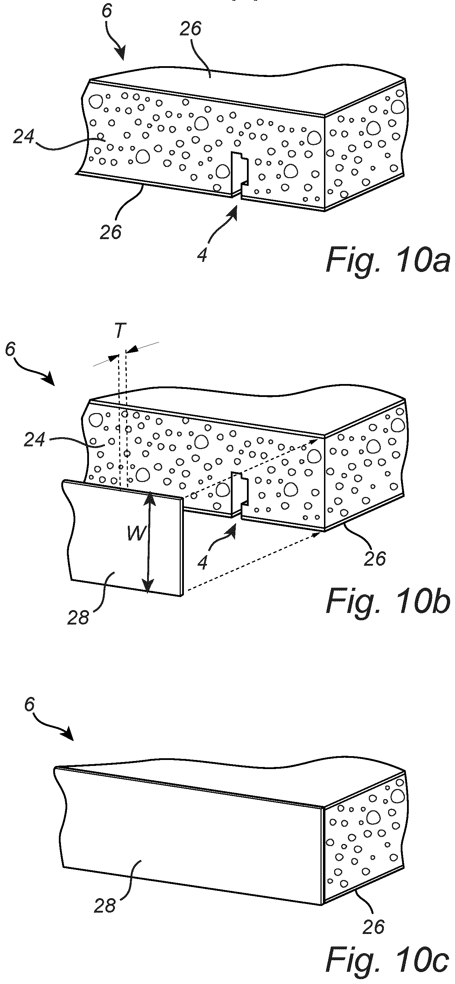

Fig. 1 is a partly cut perspective view from above of a wood-based panel 6 for being machined for forming an engagement groove 4 (see fig. 10a). The engagement groove 4 is formed in a plurality of consecutive machining steps.

The wood-based panel 6 has a rectangular shape, wherein it comprises a first main flat surface 14 and second main flat surface 16 facing in opposite directions. The first main flat surface 14 and the second main flat surface 16 are arranged in planes parallel with each other and spaced from each other. Accordingly, the wood-based panel 6 has a uniform thickness. Further, the wood-based panel 6 comprises parallel first and second straight and spaced longitudinal edges 18, 20. Further, the wood-based panel comprises parallel third and fourth straight and spaced lateral edges 22, 24. The third and fourth straight lateral edges 22, 24 are perpendicular to the first and second straight longitudinal edges 18, 20. Each one of the first, second, third and fourth straight edges 18, 20, 22, 24 extends perpendicularly to the first main flat surface 14 and the second main flat surface 16.

The wood-based panel 6 comprises a wood-based core 23 and a decorative top layer 26. The core 23 of the panel may be made of fibre board like MDF (Medium Density Fibre board) or HDF (High Density Fibre board) or plywood. The decorative top layer 26 may be a plastic coating such as Melamine. The decorative top layer 26 is provided on each one of the first main flat surface 14 and the second main flat surface 16. More specifically, the layer 26 is of a material of a significantly higher hardness than the chip panel material in the core 23 of the wood-based panel 6.

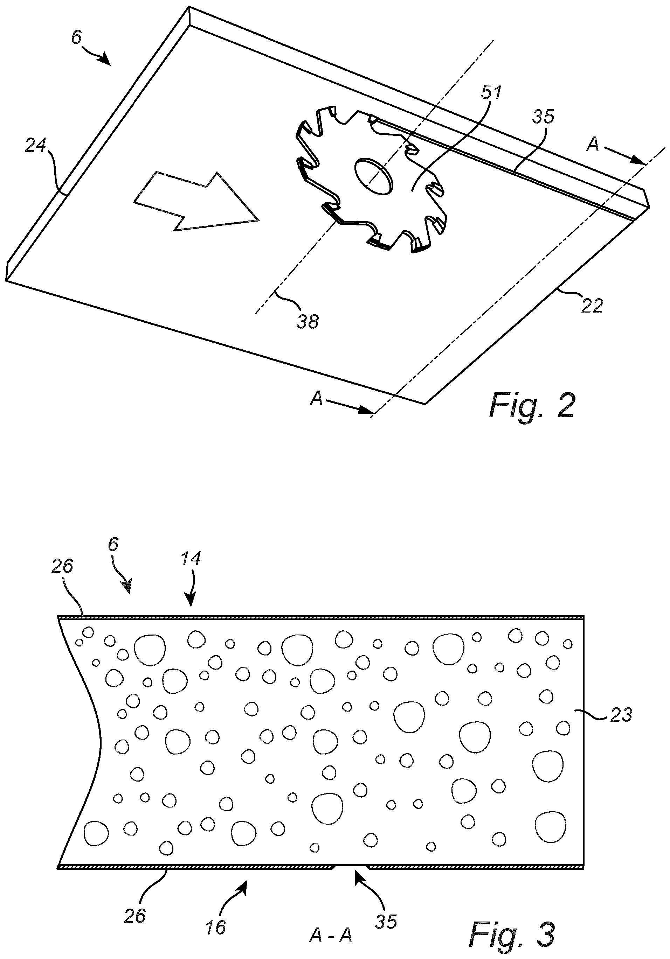

Fig. 2 is a schematic view of the wood-based panel 6 in fig. 1 and a first cutting tool 51 in the form of a rotating saw blade for material removal of the panel 6 from below in a first machining operation. More specifically, the first cutting tool 51 is adapted to machine a pre-cut groove 35. The rotating saw blade 51 has a rotational axis 38 and a periphery defining a circular shape. The wood-based panel 6 may be forwarded by means of a conveyor past the first cutting tool 51. More specifically, the wood-based panel 6 may be forwarded in a way that its parallel first and second straight longitudinal edges 18, 20 are in parallel relative to the forwarding direction. Accordingly, the wood-based panel 6 is arranged on the conveyor in a way that its parallel third and fourth lateral edges 22, 24 are arranged perpendicular with the forwarding direction. Thus, the third and fourth lateral edges 22, 24 form a front edge and rear edge in the forwarding direction.

More specifically, the rotating saw blade is arranged with its axis of rotation perpendicularly to the forwarding direction and in parallel with a main surface 16 of the wood-based panel 6, wherein the axis of rotation of the rotating saw blade is maintained at a predefined distance in relation to the main surface of the wood-based panel 6 during the complete forwarding of the wood-based panel past the rotating saw blade for forming the pre-cut groove 35.

A peripheral cutting surface of the first cutting tool 51 is adapted to engage with the wood-based panel 6 for creating the pre-cut groove 35 in the wood-based panel 6 as the wood-based panel 6 is moved relative to the first cutting tool 51. More specifically, the pre-cut groove 35 is formed along a straight line designated for the engagement groove 4. More specifically, the first cutting tool 51 enters the wood-based panel 6 in the front edge 22 and exits the wood-based panel 6 in the rear edge 24. Accordingly, the pre-cut groove 35 is formed all the way from the front edge 22 of the wood-based panel 6 to the rear edge 24 of the wood-based panel 6. More specifically, the cutting tool 30 is adapted for cutting the pre-cut groove 35 in the wood-based panel 6 with a constant depth along a straight line designated for the engagement groove 4.

Fig. 3 is a cross sectional view of the wood-based panel 6 along the cut A-A in fig. 2. It may be noted that the pre-cut groove 35 is cut throughout the hard surface layer 26 of the wood-based panel 6. The pre-cut groove 35 is cut so that it does not engage with the core 23 of chip panel material, or at least does not engage with the core 23 of chip panel material to a significant extent. In other words, the rotating saw blade is arranged so that its rotational axis 38 is at such a distance from the main face of the panel that the cutting surface extends a distance into the panel substantially commensurate with a thickness of the hard surface layer 26 of the wood-based panel 6.

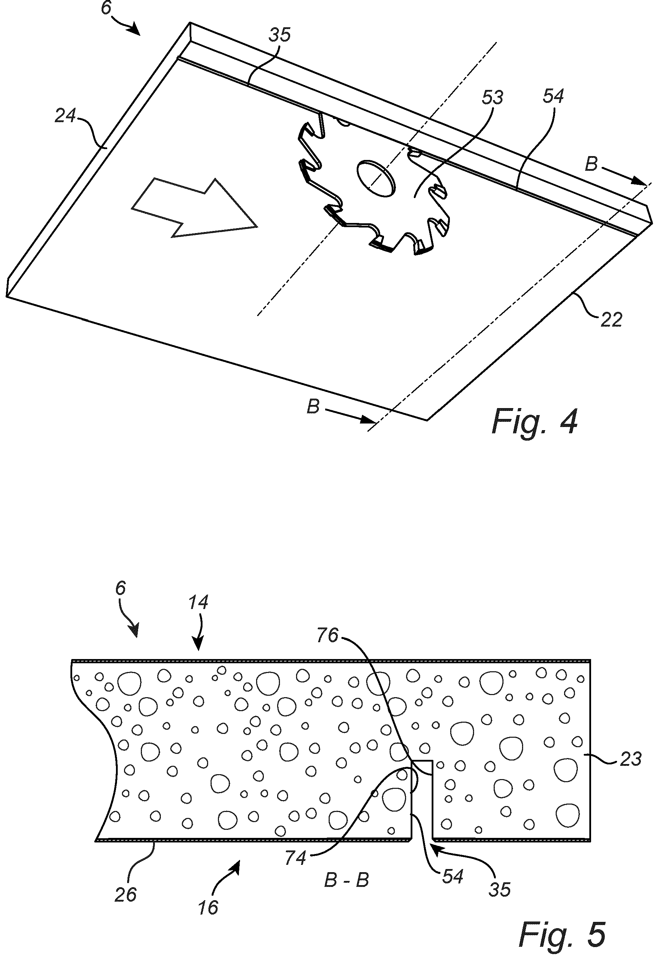

Fig. 4 is a schematic view of the wood-based panel 6 and a second cutting tool 53 for material removal of the panel from below in a second machining operation after the material removal in fig. 2. The cutting tool 53 is adapted for forming a base portion 54 of the engagement groove 4. The base portion 54 is adapted to form a significant portion of the engagement groove 4 in a cross section. The base portion 54 of the engagement groove forms a linear groove with a constant depth and constant width along its extension. More specifically, the base portion 54 of the engagement groove is cut so that it is located in parallel with and coinciding with the pre-cut groove 35.

More specifically, the second cutting tool 53 comprises a rotating saw blade arranged with its axis of rotation perpendicularly to the forwarding direction and in parallel with a main surface of the wood-based panel 6, wherein the axis of rotation of the rotating saw blade is maintained at a predefined distance in relation to the main surface of the wood-based panel 6 during the complete forwarding of the wood-based panel past the rotating saw blade for forming the base portion 54 of the engagement groove 4. The base portion 54 is cut so that it engages with the core 23 of chip panel material. The rotating saw blade of the second cutting tool 53 has a thickness that is substantially the same as a thickness of the rotating saw blade of the first cutting tool 38. Accordingly, the base portion 54 of the engagement groove 4 formed by the second cutting tool 53 has a width substantially the same as a width of the pre-cut groove 35 formed by the first cutting tool 38. Fig. 5 is a cross sectional view of the panel along the cut B-B in fig. 4.

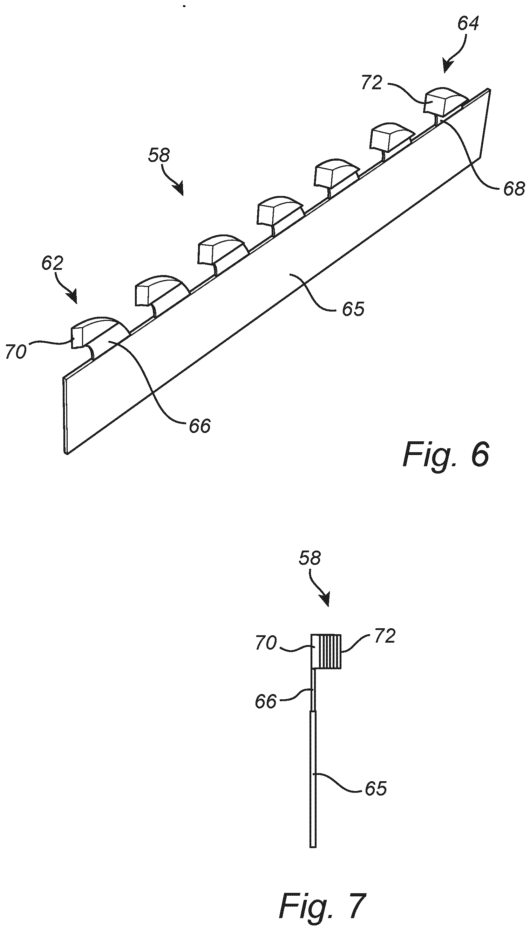

Fig. 6 is a perspective view of a stationary cutting device 58. Fig. 7 is a front view of the stationary cutting device 58 in fig. 6 in the forwarding direction. The cutting device 58 comprises a plurality of stationary cutting heads 62, 64 arranged in a spaced relationship in the forwarding direction. The stationary cutting heads 62, 64 are rigidly arranged on a support piece 65. A support part 66, 68 of the stationary cutting head 62, 64 is adapted to enter an open end of the base portion 54 of the engagement groove 4 at the front edge 22 of the wood-based panel 6 and a cutting part 70, 72 of the stationary cutting head, that extends transversally relative to the support part 66, 68, engages with the wood-based panel adjacent the base portion 54 of the engagement groove 4. Further, the stationary cutting heads 62, 64 have cutting surfaces displaced in the transverse direction relative to the forwarding direction for successively cutting material during forwarding of the wood-based panel 6 for forming an undercut 60. In other words, a width of the cutting heads 62, 64 increase from the first cutting head 62 to a last cutting head 64 in the forwarding direction. The cutting heads 62, 64 have cutting edges at a height corresponding with the position of an undercut groove 60 to be formed in the wood-based panel 6.

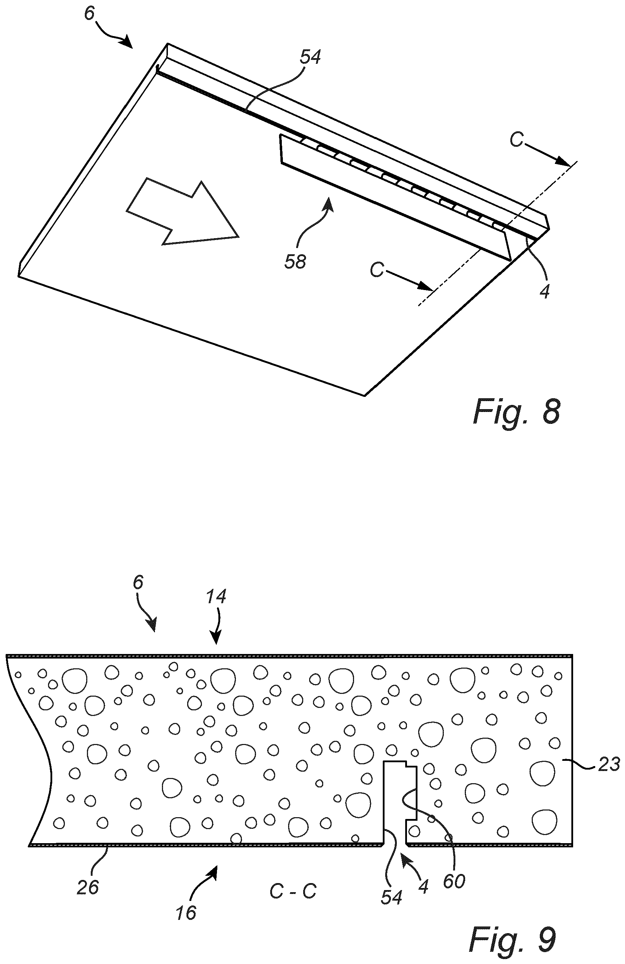

Fig. 8 is a schematic view of the panel and the stationary cutting device 58 in fig. 6 for material removal of the panel from below in a third machining operation after the material removal in fig. 4.

In summary, after the cutting step of the second cutting tool 53, the wood-based panel 6 will have a longitudinal straight groove 35. The longitudinal straight groove 35 has a rectangular cross section with one open side, as seen in an end view. In the next step, the wood-based panel 6 will pass over the cutting device 58, wherein the cutting device 58 is received in the longitudinal straight groove 35.

The first cutting head 62 in the row of cutting heads is the first one to enter the longitudinal straight groove 35 of the wood-based panel 6. The last cutting head 64 in the row is the last cutting head to enter the longitudinal straight groove 35 of the wood-based panel 6. The number of cutting heads 6 may vary. The cutting width of the cutting heads 62, 64 increases from the first cutting head 62 to the last cutting head 64. Thus, the width of the undercut groove 60 is increased somewhat for each passing cutting head 62, 64.

Accordingly, the cutting device 58 is adapted to remove material from at least one of the lateral surfaces 74, 76 defining the base portion 54 of the engagement groove 4.

As each cutting head 62, 64 only takes away a small amount of material, the relative travel speed of the wood-based panel past the cutting device 58 can be held relatively high without extensive heating of the wood-based panel 6 or the cutting device 58.

Fig. 9 is a cross sectional view of the wood-based panel 6 along the cut C-C in fig. 8.

Fig. 10a is a perspective cut view of the wood-based panel 6 in fig. 9, wherein the rear edge 24 is shown. Fig. 10b is a perspective cut view of the wood-based panel 6 in fig. 10a, wherein an edge strip 28 is disclosed for application on the rear edge 24. The edge strip 28 is adapted to cover a second end of the engagement groove 4 where the cutting tool 58 exited the wood-based panel 6. The edge strip 28 has an extension covering substantially the complete rear edge 24 of the wood-based panel 6. The edge strip 28 may be of a plastic material, for example polypropylene (PP), acrylonitrile butadiene styrene (ABS), polyvinyl chloride (PVC), acrylic polymer, polyethylene (PE), polyamide (PA), polystyrene (PS), polyoxymethylene (POM), polytetrafluoroethylene (PTFE), or a combination thereof. Alternatively or additionally, the edge strip 28 may be made of a strip of solid wood or solid wood veneer. The edge strip 28 in the form of a solid wood strip may be formed from for example, oak, beech, birch, pine, or another type of solid wood. Fig. 10c is a perspective cut view of the wood-based panel 6 in fig. 10b, wherein the edge strip 28 is applied. It may be noted that a first end of the engagement groove 4 in the front edge 22 is maintained in an open state (not covered by any edge strip).

As shown in Figs. 10b and 10c, the edge strip 28 has an extension covering substantially the complete rear edge 24 of the wood-based panel 6. The edge strip 28 may thus typically have a width W (shown in Fig. 10b) of 5-40 mm depending on the width of the rear edge 24. The edge strip 28 may have the same length as the rear edge 24 to cover essentially the entire length of the rear edge 24. The edge strip 28 typically has a thickness T of 0.5-5 mm, more typically a thickness T of 0.7-3 mm. Preferably, the area formed by the width W multiplied by the length of the edge strip 28 corresponds to the area of the rear edge 24.

The edge strip 28 may be attached to the rear edge 24 by means of an adhesive, for example a hot melt glue, a polyvinyl acetate adhesive, an epoxy adhesive, a polyurethane adhesive, a polyimide adhesive, or another suitable adhesive. The edge strip 28 may also be attached using a fastening means such as a rivet, screw, nail or bolt. Further, the edge strip 28 may be heated and thus melted onto the rear edge 24 of the wood-based panel 6.

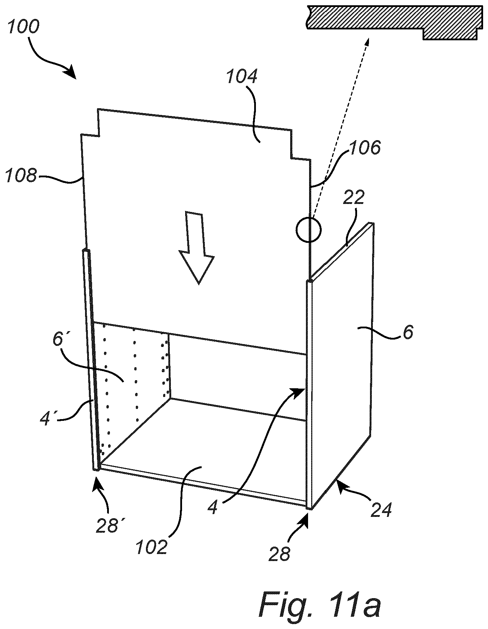

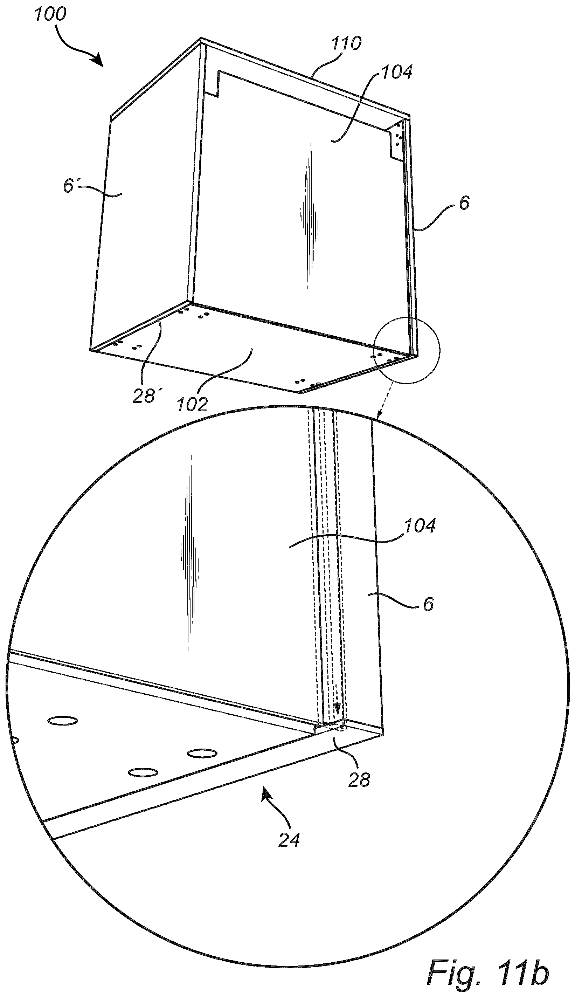

The wood-based panel 6 according to fig. 10c is now adapted for being applied as a lateral wall of a piece of furniture in the form of a storage unit, such as a cabinet 100, see fig. 11a and fig. 11b. More specifically, the engagement groove 4 is adapted for receipt of an edge of a further panel 104 in a way that the further panel 104 is slidingly entered into the engagement groove 4 in the upper edge 22 of the panel and moved along the engagement groove 4 towards the lower edge 24 of the panel. Since the edge strip 28 covers the end of the engagement groove 4 at the rear edge 24 of the panel, the edge strip 28 forms an end stop for the movement of the further panel 104.

More specifically, two wood-based panels 6, 6' may be formed with engagement grooves 4, 4' in a mirrored relationship. Accordingly, the two wood-based panels 6, 6' may form a left vertical lateral wall and a right vertical lateral wall that are mirrored with regard to the longitudinal engagement grooves 4, 4' so that the longitudinal engagement grooves face each other. The further panel 104 may have a general rectangular shape and be adapted to form a back wall that is arranged so that its opposite edges 106,108 engage with the engagement grooves 4, 4', wherein the edge strips 28, 28' form an end stop for the back wall 104 for aligning the back wall relative to the left vertical lateral wall 6' and the right vertical lateral wall 6. More specifically, each one of the lateral edges 106, 108 of the back wall has a cross section shape that is the same as a cross section shape of the longitudinal engagement groove 4, 4'.

The left vertical lateral wall 6' and the right vertical lateral wall 6 are arranged at a distance from each other in a horizontal direction for defining a storage space between the walls. The further rectangular panel 104 forms a vertical back wall spanning the distance between the left vertical lateral wall 6' and the right vertical lateral wall 6. The longitudinal engagement groove 4, 4' extends in a main face of the wall and adjacent a rear edge of the wall.

The cabinet 100 further comprises a bottom wall 102, wherein the two wood-based panels 6 are attached to the bottom wall 102 in a way that they extend perpendicularly with regard to the bottom wall 102. The back wall 104 is slid from above and downwards so that its opposite edges 106, 108 simultaneously engage with the engagement grooves 4, 4' in the side walls 6, 6'. The undercut engagement grooves 4 and the opposite edges 106, 108 have complimentary shaped crosswise geometries for engagement. Fig. 11b further shows a top wall 110 that is adapted to be arranged on top of and attached to the side walls 6 in a state in parallel with the bottom wall 102.

It is to be understood that the present invention is not limited to the embodiments described above and illustrated in the drawings; rather, the skilled person will recognize that many changes and modifications may be made within the scope of the appended claims.

## Claims

1. A piece of furniture (100) in the form of a storage unit, wherein the piece of furniture comprises at least two rectangular wood-based panels (6, 6') forming a left vertical lateral wall and a right vertical lateral wall, wherein the left vertical lateral wall and the right vertical lateral wall are arranged at a distance from each other in a horizontal direction for defining a storage space between the walls, wherein the piece of furniture (100) further comprises a further rectangular panel (104) forming a vertical back wall spanning the distance between the left vertical lateral wall and the right vertical lateral wall, wherein each one of the left vertical lateral wall and the right vertical lateral wall is provided with a longitudinal engagement groove (4, 4') extending in a main face of the wall and adjacent a rear edge of the wall, wherein a first end of the engagement groove is open towards an upper edge of the wall, wherein an edge strip (28, 28') is provided on a lower edge of the wall covering a second end of the engagement groove, wherein the left vertical lateral wall and the right vertical lateral wall are mirrored with regard to the longitudinal engagement grooves (4, 4') so that the longitudinal engagement grooves face each other and the back wall (104) is arranged so that its opposite edges (106, 108) engage with the engagement grooves, wherein the edge strips (28, 28') form an end stop for the back wall for aligning the back wall relative to the left vertical lateral wall and the right vertical lateral wall.

2. A piece of furniture according to claim 1, wherein the longitudinal engagement groove (4, 4') is an undercut groove.

3. A piece of furniture according to claim 1 or 2, wherein the edge strip (28, 28') is formed in a plastic material.

4. A piece of furniture according to any one of claims 1 to 3, wherein the edge strip (28, 28') has a width W in the range of 5 to 40 mm, preferably the width W of the edge strip (28, 28') corresponds to the width of a wood panel (6) rear edge (24) to which the edge strip (28, 28') is attached.

5. A piece of furniture according to any one of claims 1 to 4, wherein the edge strip (28, 28') has thickness T in the range of 0.5 to 5 mm, preferably 0.7 to 3 mm.

6. A piece of furniture according to any one of claims 1 to 5, wherein the edge strip (28, 28') has the same length as the rear edge (24) to cover essentially the entire length of a wood panel (6) rear edge (24) to which the edge strip (28, 28') is attached .

7. A kit of parts for forming a piece of furniture (100) in the form of a storage unit, wherein the kit of parts comprises at least two rectangular wood-based panels (6, 6') adapted for forming a left vertical lateral wall and a right vertical lateral wall in the storage unit, wherein the kit of parts further comprises a further rectangular panel (104) adapted for forming a back wall spanning the distance between the left vertical lateral wall and the right vertical lateral wall in the storage unit, wherein each one of the two rectangular wood-based panels is provided with a longitudinal engagement groove (4, 4') extending in a main face of the panel and adjacent a rear edge of the panel, wherein a first end of the engagement groove (4, 4') is open towards an upper edge of the panel, wherein an edge strip (28, 28') is provided on a lower edge of the panel covering a second end of the engagement groove (4, 4'), wherein the two rectangular wood-based panels are mirrored with regard to the longitudinal engagement grooves so that, in an assembled state, the longitudinal engagement grooves face each other and the back wall may be arranged so that its opposite edges engage with the engagement grooves, wherein the edge strips form an end stop for the back wall during assembly as the back wall may be slid into the engagement grooves from above and downwards.

8. A kit of parts according to claim 7, wherein the longitudinal engagement groove (4, 4') is an undercut groove.

9. A kit of parts according to claim 6 or 7, wherein the edge strip (28, 28') is formed in a plastic material.

10. A method for creating a lateral wall (6, 6') for a piece of furniture (100) in the form of a storage unit, comprising the steps of forming a longitudinal engagement groove (4, 4') in a rectangular wood-based panel by moving at least one cutting tool (51, 53, 58) in relation to the wood-based panel in at least one operation so that the cutting tool engages with the wood-based panel at a first edge (22) of the wood-based panel and exits the wood-based panel at a second edge (24) of the wood-based panel opposite the first edge and thereafter attaching an edge strip (28, 28') on the second edge of the wood-based panel so that the edge strip covers a second end of the engagement groove where the cutting tool exited the wood-based panel while maintaining a first end of the engagement groove in an open state.

11. A method according to claims 10, wherein the cutting tool (51, 53) comprises a rotating saw blade adapted to form the engagement groove (4, 4').

12. A method according to claim 10 or 11, wherein the method comprises the steps of forming the longitudinal engagement groove (4, 4') with an undercut by moving at least two cutting tools (51, 53, 58) in relation to the wood-based panel in two consecutive operations.

13. A method according to claim 12, wherein a base portion of the engagement groove is formed in a first operation by means of a first cutting tool (51, 53), wherein a second cutting tool (58) comprises at least one stationary cutting head for forming the undercut, wherein the wood-based panel is forwarded so that a support part of the stationary cutting head enters an open end of the base portion of the engagement groove and a cutting part of the stationary cutting head, that extends transversally relative to the support part, engages with the wood-based panel adjacent the base portion of the engagement groove.

14. A method according to any one of claims 10-13, wherein the edge strip (28, 28') is formed in a plastic material.

15. A method according to any one of claims 10-14, comprising the step of forming the longitudinal engagement groove in a linear extension in parallel with and adjacent a lateral edge of the wood-based panel.
